# EUROPÄISCHE PATENTSCHRIFT

(11) **EP 0 887 398 B1**
(45) Veröffentlichungstag und Bekanntmachung des Hinweises auf die Patenterteilung: **30.08.2000**
(21) Anmeldenummer: 98110152.0
(22) Anmeldetag: 04.06.1998
(51) Int. Cl.: C09K 19/00, C09D 5/36, C09K 19/54

(54) **Mischung enthaltend Pigmente mit flüssigkristalliner Struktur mit chiraler Phase sowie ihre Verwendung**
Mixture containing pigments with chiral liquid crystal structure and their use
Mélange contenant des pigments à structure liquide cristalline chirale et leur utilisation

(30) Priorität: 19.06.1997 DE 19726050
(43) Veröffentlichungstag der Anmeldung: 30.12.1998
(73) Patentinhaber: Wacker-Chemie GmbH, 81737 München (DE)
(72) Erfinder: Müller-Rees, Christoph, Dr., 82049 Pullach (DE); Hanelt, Eckhard, Dr., 82269 Geltendorf (DE); Kreuzer, Franz-Heinrich, Dr., 82152 Martinsried (DE); Küpfer, Jürgen, Dr., 80686 München (DE); Leigeber, Horst, 82041 Oberhaching (DE)
(74) Vertreter: Potten, Holger

(56) Entgegenhaltungen:
- EP-A- 0 685 749
- DE-A- 4 416 191
- DE-A- 4 418 075

## Beschreibung

Die Erfindung betrifft Mischungen enthaltend Pigmente, die orientierte dreidimensional vernetzte Substanzen mit flüssigkristalliner Struktur mit chiraler Phase enthalten sowie die Verwendung solcher Mischungen.

Pigmente enthaltend orientierte dreidimensional vernetzte Substanzen mit flüssigkristalliner Struktur mit chiraler Phase sind beispielsweise aus DE 42 407 43 (entspricht US 5362315) bekannt. Diese Pigmente haben eine vom Betrachtungswinkel abhängige Farbigkeit und können in beliebigen Medien, wie beispielsweise Lacken, Bindemitteln oder Kunststoffen eingesetzt werden. Dies ist beispielsweise in EP 0 686 674 ausführlich beschrieben. Ein breites Anwendungsfeld erschließt sich derartigen Pigmenten bei der Lackierung von Gegenständen, beispielsweise Kraftfahrzeugen.

Wie in EP 0 724 005 festgestellt wurde, zeigen nach DE 42 40 743 hergestellte Pigmente Farbveränderungen, wenn der Lack enthaltend die genannten Pigmente bei unterschiedlichen Einbrenntemperaturen verarbeitet wird. Dies ist beispielsweise bei Lackierungen von Kraftfahrzeugen der Fall.

Nach dem Stand der Technik werden Kraftfahrzeuge bei 130 °C erstlackiert, während bei späteren Reparaturlackierungen nur noch 80 °C toleriert werden, da Bauelemente des Kraftfahrzeugs bei höheren Temperaturen beeinträchtigt werden können. Die aus den unterschiedlichen Einbrenntemperaturen resultierenden Farbunterschiede zwischen Orginallackierung und Reparaturlackierung sind nachteiligerweise mit dem bloßen Auge erkennbar.

In EP 0 724 005 A2 wird zur Lösung dieses Problems vorgeschlagen, daß die in DE 42 40 743 genannten Ausgangssubstanzen zur Herstellung der Pigmente zusammen mit weiteren farbneutralen, zumindest zwei vernetzbare Doppelbindungen enthaltende Verbindungen vernetzt werden. Auf diese Weise soll die Vernetzungsdichte der Pigmente erhöht werden, was bei der Applikation in einem 130°C- und einem 80°C-Kraftfahrzeuglacksystem zu höheren Farbbeständigkeiten führen soll.

In EP 0 724 005 A2 werden auf diese Weise hergestellte Pigmente beschrieben, die statt der bei nach DE 42 40 743 hergestellten Pigmente üblicherweise zu beobachtenden Wellenlängenmaximumverschiebung von 35-40 nm nur noch 17-24 nm aufweisen (Vergleich Raumtemperaturtrocknung des Reparaturlackes - Einbrenntemperatur bei 130°C) bzw. bei einer Temperaturdifferenz 80-130°C statt der üblichen 20-25 nm nur noch 10-14 nm. Somit wurde in EP 0 724 005 die Wellenlängendifferenz durch Materialmodifizierung auf die Hälfte, aber keineswegs auf Werte von wenigen nm reduziert. Erst bei solch geringen Wellenlängendifferenzen sind - je nach spektraler Empfindlichkeit des menschlichen Auges - visuell keine Farbunterschiede mehr zu erkennen. Das Problem der mangelnden Farbbeständigkeit der pigmenthaltigen Zusammensetzungen bei unterschiedlichen Applikationstemperaturen besteht somit weiterhin.

Die Erfindung betrifft eine Mischung umfassend Matrix und Pigmente enthaltend orientierte dreidimensional vernetzte Substanzen mit flüssigkristalliner Struktur mit chiraler Phase, die dadurch gekennzeichnet ist, daß Pigment und Matrix derart aufeinander abgestimmt sind, daß es bei Applikation der Mischung bei unterschiedlichen Temperaturen auf einem Substrat, wobei niedrigste Applikationstemperatur und höchste Applikationstemperatur um mindestens 10°C und um höchstens 150 °C auseinanderliegen, nicht zu visuell erkennbaren Farbdifferenzen der Pigmentfarbe nach dem Trocknen auf dem Substrat kommt, wobei
entweder die Pigmente enthaltend orientierte dreidimensional vernetzte Substanzen mit flüssigkristalliner Struktur mit einer chiralen Phase derart ausgewählt sind, daß deren Glasübergangstemperatur entweder nicht mehr als 10°C höher liegt als die niedrigste Applikationstemperatur oder höher liegt als die höchste Applikationstemperatur, oder
die Pigmente auf Basis orientierter dreidimensional vernetzter flüssigkristalliner Substanzen mit chiraler Phase derart ausgewählt sind, daß sie in den orientierten dreidimensional vernetzten flüssigkristallinen Substanzen keine nicht chemisch fixierte Substanzen enthalten oder
die Pigmente diese nicht chemisch fixierten Substanzen nur in solch geringen Konzentrationen in den orientierten dreidimensional vernetzten flüssigkristallinen Substanzen mit chiraler Phase enthalten, daß unter Applikationsbedingungen nur 0 bis 3 Gew.% bezogen auf das Gesamtgewicht der orientierten dreidimensional vernetzten flüssigkristallinen Substanzen mit chiraler Phase herausgelöst werden können, oder
das Matrixmaterial derart ausgewählt ist, daß es keine Komponente enthält, welche Substanzen die nicht chemisch an die orientierten dreidimensional vernetzten flüssigkristallinen Substanzen mit chiraler Phase der Pigmente gebunden sind aus den orientierten dreidimensional vernetzten flüssigkristallinen Substanzen mit chiraler Phase herauslöst oder
nur eine derart geringe Menge an solchen Komponenten enthält, daß unter Applikationsbedingungen nur 0 bis 3 Gew.% bezogen auf das Gesamtgewicht der orientierten dreidimensional vernetzten flüssigkristallinen Substanzen mit chiraler Phase der Pigmente herausgelöst werden.

Die erfindungsgemäßen Mischungen eignen sich insbesondere zur Färbung von Substratoberflächen.

Prinzipiell sind alle Pigmente enthaltend orientierte dreidimensional vernetzte Substanzen mit flüssigkristalliner Struktur mit chiraler Phase zum Einsatz in einer erfindungsgemäßen Mischung geeignet. Solche Pigmente sind beispielsweise aus DE 42 40 743 (entspricht US 5362315) bekannt.

Bei Verwendung beliebiger, für die jeweilige Applikation jeweils üblicher Bindemittel als Matrixmaterialien und vorgebener Applikationstemperatur erfolgt die Auswahl der für die erfindungsgemäße Mischung jeweils geeigneten Pigmente anhand des Glaspunktes der jeweiligen Pigmente.

Der Glaspunkt der Pigmente läßt sich in bekannter Art und Weise nach ENCYCLOPEDIA OF POLYMER SCIENCE AND ENGINEERING, Vol. 7, pp. 531 - 544, Ed. H. F. Mark, N. M. Bikales, C. G. Overberger, G. Menges, J. I. Kroschwitz; John Wiley & Sons, Inc. 1987, bestimmen. Er ist üblicherweise als Wendepunkt oder Midpoint eines breiten Glasübergangsbereiches definiert, dessen Breite bei flüssigkristallinen Polymeren typischerweise einige 10°C beträgt. Die Differenz zwischen der bei der Applikation auftretenden Temperatur und dem Glaspunkt bestimmt wesentlich die Zeitkonstante, mit der sich die Farbe bei der Applikation verändert. Je nach gewünschtem Temperaturbereich, in dem die Farbstabilität erforderlich ist, erfolgt die Auswahl der Pigmente derart, daß entweder Pigmente ausgewählt werden, deren Glaspunkt nicht mehr als 10°C höher ist als die niedrigste bei der Applikation der Mischung auftretende Temperatur oder derart, daß Pigmente ausgewählt werden, deren Glaspunkt höher ist als die höchste bei der Applikation der Mischung auftretende Temperatur.

Unter Applikationstemperatur ist im Sinne der vorliegenden Erfindung die Einbrenntemperatur bzw. die Trocknungstemperatur der erfindungsgemäßen Mischung auf der Oberfläche des Substrats, das mit der Mischung beschichtet wurde, zu verstehen.

Es ist allgemein von dreidimensional vernetzten Systemen bekannt, daß eine vollständige Umsetzung aller funktionellen ins Netzwerk einbaubaren Gruppen nicht immer unter allen Reaktionsbedingungen erfolgen kann, so daß ein Anteil derartiger Gruppen uneingebunden im Netzwerk vorliegt. Ebenso laufen chemische Reaktionen i. a. nicht ohne Bildung von Nebenprodukten ab, so daß unter Umständen im flüssigkristallinen Ausgangsmaterial auch Gruppierungen vorkommen, die keine chemisch reaktiven, polymerisationsfähigen und damit in das aufzubauende dreidimensionale Netzwerk einbaufähigen Bausteine enthalten.

Unter bestimmten Bedingungen lassen sich derartige Moleküle wieder aus dem Netzwerk herauslösen, beispielsweise durch für die jeweilige Molekülsorte chemisch affine Lösemittel, Additive oder Bindemittelbestandteile, die beispielsweise in der Bindemittel- oder Kunststoffmatrix enthalten sein können.

Ein solches Herauslösen von Substanzen, die nicht im flüssigkristallinen Netzwerk gebunden sind, in Mengen größer als 3 Gew.% bezogen auf das flüssigkristalline Material muß in der erfindungsgemäßen Kombination von Pigment und Matrixmaterial vermieden sein sofern die Kriterien, die Glastemperatur betreffend, nicht erfüllt sind.

Vorzugsweise ist das Matrixmaterial dadurch gekennzeichnet, daß es selbst keine lösenden Eigenschaften für die im flüssigkristallinen Netzwerk enthaltenen Substanzen und/oder keine quellenden Eigenschaften bezüglich des flüssigkristallinen Netzwerks der Pigmente besitzt, oder daß es keine Flüssigkeiten oder Mischungen von Flüssigkeiten enthält, die als Lösemittel für die im flüssigkristallinen Netzwerk enthaltenen Substanzen wirken und/oder keine quellenden Eigenschaften bezüglich des flüssigkristallinen Netzwerks der Pigmente besitzen die in den erfindungsgemäßen Mischungen vorhanden sind.

Als Matrixmaterial, welches keine oder nur eine geringe Menge an Komponenten enthält, die die nicht in das polymere Netzwerk der flüssigkristallinen Pigmente eingebauten Substanzen aus der helikalen Schichtstruktur herauslösen, sind vorzugsweise alle Bindemittel oder Mischungen von Bindemitteln geeignet, deren Löslichkeitsparameter (Polymer Handbook, Sec. Edition, Ed. J. Brandrup, E. H. Immergut, J. Wiley & Sons, New York, 1975), sich um mindestens 1.5 (J ^{0.5} cm^{-1.5}) Einheiten vom Löslichkeitsparameter des flüssigkristallinen Netzwerks des Pigments unterscheiden. Dies gilt für lösungsmittelhaltige und lösungsmittelfreie Bindemittel.

Beispiele für erfindungsgemäße Kombinationen von Matrixmaterial und Pigment sind im folgenden genannt:

Applikation von erfindungsgemäßen Mischungen auf Substraten in einem Temperaturbereich von minimal 80°C bis maximal 130°C dadurch gekennzeichnet, daß Pigmente mit einem Glaspunkt kleiner 80°C oder größer 130°C vorhanden sind und daß für Pigmente aus Si-haltigen oder Si-freien Materialien die Matrixmaterialien ausgewählt sind aus der Gruppe der Alkyd-, Melamin-, Polyurethan-, Harnstoff-, Phenol-, Vinylacetat-, Cellulosenitrat-, Silicon- und Polyesterharze und deren Kombinationen.

Die erfindungsgemäßen Mischungen lassen sich vorzugsweise auf folgenden Gebieten verwenden: Lackierung , Druckfarben, Kunststoffe, Pulverbeschichtung.

Beispielhaft sind im folgenden Verfahren genannt, die erfindungsgemäße Mischungen zur Beschichtung von Substratoberflächen verwenden: Spritzverfahren, Siebdruck, Rakelauftrag, Walzenauftrag, Pinselauftrag, Pulverauftrag.

Vorzugsweise werden die erfindungsgemäßen Mischungen bei Temperaturen zwischen 10°C und 300°C in den genannten Verfahren eingesetzt.

Die Erfindung betrifft ferner Lackierungen, Druckfarben, Kunststoffe und Pulverbeschichtungen beispielsweise von metallischen und keramischen Substraten sowie Holz und Kunststoffen enthaltend eine erfindungsgemäße Mischung.

Die Erfindung betrifft ferner Verkehrsmittel wie beispielsweise Straßen-, Schienen- oder Luftfahrzeuge, Haushaltsgegenstände wie beispielsweise weiße Ware, braune Ware oder Möbel, Sportgeräte, Papiere, Textilien, Vliese, Leder, Wertdrucke, Banknoten oder Kreditkarten beschichtet mit einer erfindungsgemäßen Mischung.

Die folgenden Beispiele dienen der weiteren Erläuterung der Erfindung.

### Beispiel 1: Pigment aus flüssigkristallinem Silicon

71 g (0,13 Mol) 4-Allyloxybenzoesäurecholesterinester wurden mit 170 ml Toluol versetzt. Die Suspension wurde unter Rühren zum Sieden gebracht und Toluol azeotrop andestilliert. Nach Abkühlen auf ca. 60 °C wurden 21 g (0,35 Mol) 1,3,5,7-Tetramethyl-cyclotetrasiloxan und 0.53 g einer 0.5 Gew.%-igen Lösung des Cyclooctadienyldichloroplatin-Katalysators (Wacker-Chemie GmbH, 81737 München) in Methylenchlorid zugegeben. Die Reaktionslösung wurde auf 85 °C erwärmt und für 1 Stunde gerührt. Nach Abkühlen auf 40 °C wurden 80 g (0,194 Mol) 4-Allyloxybenzoesäure-(4-(4-methacryloyloxybutoxy)phenyl)ester, 0,09 g (0.4 mmol) BHT und 1.06 g einer 0,5 Gew.%-igen Lösung des Cyclooctadienyldichloroplatin-Katalysators in Methylenchlorid zugegeben. Die Lösung wurde danach auf ca. 75 °C erwärmt und für 1,5 Stunden gerührt. Nach Abkühlen auf 20 °C wurden 43,0 g (104 mmol) 4-Allyloxybenzoesäure-(4-(4-methacryloyloxybutoxy)phenyl)ester und 0,09 g BHT zugegeben. Anschließend wurden 5,36 g des Photoinitiators Irgacure 507® (Ciba-Geigy, Basel, Schweiz) zugegeben.
Die Lösung wurde mittels eines Dünnschichtverdampfers bei 25 mbar Druck und einer Heizmanteltemperatur von 90°C vom Lösungsmittel befreit (Restgehalt < 1 Gew.% Toluol).

Der so erhaltene Flüssigkristall besitzt einen Glasübergang bei ca. - 8°C. Die Klärtemperatur (Peak) von cholesterisch zu isotrop liegt bei 103°C. Die Viskosität beträgt bei 90°C ca. 700 mPas.
Bei 90 °C orientierte und UV-vernetzte dünne Filme des Materials weisen nach dem Abkühlen auf 20 °C eine Reflexionswellenlänge von 540 nm auf. Das vernetzte Material besitzt eine Glasübergangstemperatur von 72 °C. Der durch Behandlung mit Chloroform aus dem vernetzten Material extrahierbare Anteil beträgt 8 Gew.%.

Die dünnen Filme des Materials wurden durch Mahlen in einer Laboruniversalmühle zu Pigmenten verarbeitet. Durch 15minütiges Mahlen entstand eine pulverförmige Fraktion, die anschließend mittels eines Analysensiebes mit einer Maschenweite von 50 µm gesiebt wurde.

Diese Pigmente wurden in ein konventionelles Alkyd-Melamin-Harzbindemittel-System (käuflich erhältlich unter der Bezeichnung Sacolyd F 410/Sacopal M 110 bei Kolms Chemie, A-Krems) für Kraftfahrzeugreparaturlackierung eingearbeitet. Die Viskosität des Bindemittelsystems wurde mit einem Verdünner (Mischung aus aromatischen Kohlenwasserstoffen und Methylisobutylketon)in in einem DIN-4-Auslaufbecher auf eine Auslaufzeit von ca. 80 sec eingestellt.

Das so erhaltene Pigment-Bindemittelsystem wurde auf ein Schwarz-weiß-Papier (BYK Gardner) mit Hilfe eines Filmziehgerätes (Fa. Erichsen) in einer Naßfilmschichtdicke von 120 µm aufgerakelt. Anschließend wurde das Papier in mehrere Streifen geschnitten und jeweils 1 h bei 80 und 130 °C getrocknet.

Die so erhaltenen Streifen wurden dann unter 45° mit weißem Licht beleuchtet und das unter 25° reflektierte Licht spektrometrisch vermessen. Die so erhaltenen Meßwerte (Reflexionsmaxima) sind in der folgenden Tabelle aufgelistet, ebenso die Glasübergangstemperatur der Pigmente sowie die durch Behandlung mit Chloroform aus dem vernetzten Material extrahierbaren Anteile.

| Einbrenntemperaturen | Wellenlängen der Maxima | Wellenlängendifferenz der Maxima | Glasübergangstemperatur des Pigments | extrahierbare Anteile |
|---|---|---|---|---|
| 80 °C | 501 nm | | 72 °C | 8 Gew.% |
| 130 °C | 503 nm | +2 nm | | |

### Vergleichsbeispiel 1

Es wurde für Pigmente, die nach EP 0 686 674 Beispiel 4 hergestellt wurden, gemäß Beispiel 1 vorgegangen und es wurden folgende Ergebnisse erhalten:

| Einbrenntemperaturen | Wellenlängen der Maxima | Wellenlängendifferenz der Maxima | Glasübergangstemperatur des Pigments | extrahierbare Anteile |
|---|---|---|---|---|
| 80 °C | 481 nm | | 82 °C | 15 Gew.% |
| 130 °C | 470 nm | -11 nm | | |

### Beispiel 2

Ein flüssigkristallines Material wurde gemäß DE 44 08 171 A1 folgendermaßen hergestellt: Die Komponenten K5, K6, K8, K9 (Beispiel 85, Mischung 33) sowie die Komponenten K1, K2, K4, K5 (Beispiel 92, Mischung 40) wurden in gleichen Anteilen vermischt. Zu dieser Mischung wurden 10 Gew.% der Komponente K10 (Beispiel 78, Mischung 26) gegeben und wiederum vermischt. Aus dieser Mischung wurden Pigmente wie in EP 0 686 674 A1 Beispiel 1 beschrieben hergestellt, wobei die Temperatur der Orientierung des flüssigkristallinen Materials 50 °C betrug. Die Pigmente wurden analog Beispiel 1 verarbeitet, eingebrannt und vermessen.

| Einbrenntemperaturen | Wellenlängen der Maxima | Wellenlängendifferenz der Maxima | Glasübergangstemperatur des Pigments | extrahierbare Anteile |
|---|---|---|---|---|
| 80 °C | 434 nm | | 60 °C | 8 Gew.% |
| 130 °C | 432 nm | -2 nm | | |

### Beispiel 3

1 g der nach EP 0 686 674 (Beispiel 3) hergestellten Pigmente wurden in ein Siebdruckbindemittelsystem, das auf einer Lösung von Acrylatharzen und Cellulosederivaten in acetathaltigen Lösungsmitteln beruht, (Typ Noristar PG, Fa. Pröll, Weißenburg) durch 5 minütiges Rühren eingearbeitet und wie in Beispiel 1 beschrieben auf ein Schwarz-weiß-Papier (BYK Gardner) aufgerakelt. Das Papier wurde in Stücke geschnitten, die jeweils 1 h bei 20 °C und 80 °C in einem Trockenschrank getrocknet wurden. Anschließend wurden die Proben wie in Beispiel 1 vermessen. Das Ergebnis ist in folgender Tabelle wiedergegeben:

| Trocknungstemperaturen | Wellenlängen der Maxima | Wellenlängendifferenz der Maxima |
|---|---|---|
| 20 °C | 578 nm | - |
| 80 °C | 578 nm | 0 nm |

### Vergleichsbeispiel 2

Es wurde wie in Beispiel 3 beschrieben verfahren mit dem Unterschied, daß ein nicht-oxidativ trocknendes Siebdruckbindemittelsystem verwendet wurde, das u. a. größere Anteile aromatischer Bestandteile enthält (Typ Seristar SC, Fa. Sericol, Mühlheim/Ruhr). Die Viskosität wurde mit einem Verdünner (Typ ZC 530, Fa. Sericol) auf eine Auslaufzeit von 95 sec in einem DIN 4-Becher eingestellt. Nach Trocknung unter den im Beispiel 3 angegebenen Bedingungen wurden folgende Wellenlängen der Maxima erhalten:

| Trocknungstemperaturen | Wellenlängen der Maxima | Wellenlängendifferenz der Maxima |
|---|---|---|
| 20 °C | 573 nm | - |
| 80 °C | 549 nm | 24 nm |

## Patentansprüche

1. Mischung umfassend Matrix und Pigmente enthaltend orientierte dreidimensional vernetzte Substanzen mit flüssigkristalliner Struktur mit chiraler Phase, die dadurch gekennzeichnet ist, daß Pigment und Matrix derart aufeinander abgestimmt sind, daß es bei Applikation der Mischung bei unterschiedlichen Temperaturen auf einem Substrat, wobei niedrigste Applikationstemperatur und höchste Applikationstemperatur um mindestens 10°C und um höchstens 150 °C auseinanderliegen, nicht zu visuell erkennbaren Farbdifferenzen der Pigmentfarbe nach dem Trocken auf dem Substrat kommt, wobei
entweder die Pigmente enthaltend orientierte dreidimensional vernetzte Substanzen mit flüssigkristalliner Struktur mit einer chiralen Phase derart ausgewählt sind, daß deren Glasübergangstemperatur entweder nicht mehr als 10°C höher liegt als die niedrigste Applikationstemperatur oder höher liegt als die höchste Applikationstemperatur, oder
die Pigmente auf Basis orientierter dreidimensional vernetzter flüssigkristalliner Substanzen mit chiraler Phase derart ausgewählt sind, daß sie in den orientierten dreidimensional vernetzten flüssigkristallinen Substanzen keine nicht chemisch fixierte Substanzen enthalten oder
die Pigmente diese nicht chemisch fixierten Substanzen nur in solch geringen Konzentrationen in den orientierten dreidimensional vernetzten flüssigkristallinen Substanzen mit chiraler Phase enthalten, daß unter Applikationsbedingungen nur 0 bis 3 Gew.% bezogen auf das Gesamtgewicht der orientierten dreidimensional vernetzten flüssigkristallinen Substanzen mit chiraler Phase herausgelöst werden können, oder
das Matrixmaterial derart ausgewählt ist, daß es keine Komponente enthält, welche Substanzen die nicht chemisch an die orientierten dreidimensional vernetzten flüssigkristallinen Substanzen mit chiraler Phase der Pigmente gebunden sind aus den orientierten dreidimensional vernetzten flüssigkristallinen Substanzen mit chiraler Phase herauslöst oder
nur eine derart geringe Menge an solchen Komponenten enthält, daß unter Applikationsbedingungnen nur 0 bis 3 Gew.% bezogen auf das Gesamtgewicht der orientierten dreidimensional vernetzten flüssigkristallinen Substanzen mit chiraler Phase der Pigmente herausgelöst werden.

2. Mischung nach Anspruch 1, dadurch gekennzeichnet, daß sie ein Matrixmaterial enthält, das selbst keine lösenden Eigenschaften für die im flüssigkristallinen Netzwerk enthaltenen Substanzen und/oder keine quellenden Eigenschaften bezüglich des flüssigkristallinen Netzwerks der Pigmente besitzt, oder daß sie keine Flüssigkeiten oder Mischungen von Flüssigkeiten enthält, die als Lösemittel für die im flüssigkristallinen Netzwerk enthaltenen Substanzen wirken und/oder keine quellenden Eigenschaften bezüglich des flüssigkristallinen Netzwerks der Pigmente besitzen.

3. Mischung nach Anspruch 1, oder 2 dadurch gekennzeichnet, daß die Matrixmaterialien ausgewählt sind aus der Gruppe der Alkyd-, Melamin-, Polyurethan-, Harnstoff-, Phenol-, Vinylacetat-, Cellulosenitrat-, Silicon- und Polyesterharze und deren Kombinationen.

4. Verfahren zur Applikation von Mischungen gemäß einem oder mehreren der Ansprüche 1 bis 3 auf Substratoberflächen im Spritzverfahren, Siebdruckverfahren, Rakelauftrag, Walzenauftrag, Pinselauftrag, Pulverauftrag im Temperaturbereich von 10°C - 300°C.

5. Verwendung von Mischungen gemäß Anspruch 1 bis 3 in Spritzverfahren, im Siebdruck, beim Rakelauftrag, beim Walzenauftrag, beim Pinselauftrag oder beim Pulverauftrag.

6. Lackierung, Druckfarbe, Kunststoff oder Pulverbeschichtung enthaltend eine Mischung gemäß einem oder mehreren der Ansprüche 1 bis 3.

7. Verkehrsmittel, Haushaltsgegenstände, Sportgeräte, Papiere, Textilien,Vliese, Leder, Wertdrucke, Banknoten oder Kreditkarten beschichtet mit einer Mischung gemäß einem oder mehreren der Ansprüche 1 bis 3.

## Claims

1. Mixture comprising matrix and pigments comprising oriented three-dimensionally crosslinked substances having a liquid-crystalline structure with a chiral phase, which is characterized in that pigment and matrix are matched to one another in such a way that on application of the mixture at different temperatures to a substrate, the lowest application temperature and the highest application temperature differing by at least 10°C and by not more than 150°C, there are no visually perceptible colour differences of the pigmented paint on the substrate after drying, where
alternatively the pigments comprising oriented three-dimensionally crosslinked substances having a liquid-crystalline structure with a chiral phase are selected such that their glass transition temperature is either not more than 10°C higher than the lowest application temperature or is higher than the highest application temperature, or
the pigments based on oriented three-dimensionally crosslinked liquid-crystalline substances with a chiral phase are selected such that in the oriented three-dimensionally crosslinked liquid-crystalline substances they comprise no substances which are not chemically fixed, or
the pigments comprise the said substances which are not chemically fixed only in such low concentrations in the oriented three-dimensionally crosslinked liquid-crystalline substances with a chiral phase that under application conditions only from 0 to 3% by weight, based on the overall weight of the oriented three-dimensionally crosslinked liquid-crystalline substances with a chiral phase can be dissolved out, or
the matrix material is selected such that it contains no component which dissolves out substances which are not chemically bonded to the oriented three-dimensionally crosslinked liquid-crystalline substances with a chiral phase of the pigments from the oriented three-dimensionally crosslinked liquid-crystalline substances with a chiral phase, or
comprises only such a small amount of such components that under application conditions only from 0 to 3% by weight, based on the overall weight of the oriented three-dimensionally crosslinked liquid-crystalline substances with a chiral phase of the pigments are dissolved out.

2. Mixture according to Claim 1, characterized in that it comprises a matrix material which does not itself possess any solvent properties for the substances present in the liquid-crystalline network and/or any swelling properties with respect to the liquid-crystalline network of the pigments, or which contains no liquids or mixtures of liquids which act as solvents for the substances present in the liquid-crystalline network and/or possess no swelling properties with respect to the liquid-crystalline network of the pigments.

3. Mixture according to Claim 1 or 2, characterized in that it the matrix materials are selected from the group consisting of alkyd, melamine, polyurethane, urea, phenolic, vinyl acetate, cellulose nitrate, silicone and polyester resins and combinations thereof.

4. Method of applying a mixture according to one or more of Claims 1 to 3 to substrate surfaces by a spray technique, screen printing process, knife coating, roller coating, brush coating or powder coating in the temperature range from 10°C - 300°C.

5. Use of mixtures according to any of Claims 1 to 3, in spray techniques, in screen printing, in knife coating, in roller coating, in brush coating or in powder coating.

6. Finish, printing ink, plastic or powder coating comprising a mixture according to one or more of Claims 1 to 3.

7. Means of transport, household articles, items of sports equipment, papers, textiles, nonwovens, leather, securities, banknotes or credit cards coated with a mixture according to one or more of Claims 1 to 3.

## Revendications

1. Mélange comprenant une matrice et des pigments contenant des substances orientées réticulées de manière tridimensionnelle à structure liquide-cristalline avec une phase chirale, qui est caractérisé en ce que le pigment et la matrice sont accordés l'un à l'autre de telle sorte que, lors de l'application du mélange sur un substrat à différentes températures, la température d'application la plus basse et la température d'application la plus élevée étant séparées d'au moins 10°C et de tout au plus 150°C, il n'apparaît pas de différences de couleur visuellement perceptibles de la couleur de pigment sur le substrat après le séchage, étant entendu soit que les pigments contenant les substances orientées réticulées de manière tridimensionnelle à structure liquide-cristalline avec une phase chirale sont sélectionnés de telle sorte que leur température de transition vitreuse soit n'est pas élevée de plus de 10°C par rapport à la température d'application la plus basse, soit est plus élevée que la température d'application la plus élevée, soit que les pigments à base de substances liquides-cristallines orientées réticulées de manière tridimensionnelle avec une phase chirale sont sélectionnés de telle sorte que, dans les substances liquides-cristallines orientées réticulées de manière tridimensionnelle, ils ne contiennent pas de substances non fixées de manière chimique ou les pigments ne contiennent ces substances non fixées de manière chimique qu'en des concentrations tellement faibles dans les substances liquides-cristallines orientées réticulées de manière tridimensionnelle avec une phase chirale, que, dans les conditions d'application, seuls 0 à 3% en poids, sur base du poids total des substances liquides-cristallines orientées réticulées de manière tridimensionnelle avec une phase chirale, peuvent être extraits, soit que le matériau de matrice est sélectionné de sorte qu'il ne contient pas de composant qui extrait des substances liquides-cristallines orientées réticulées de manière tridimensionnelle avec une phase chirale, les substances qui ne sont pas liées chimiquement aux substances liquides-cristallines orientées réticulées de manière tridimensionnelle avec une phase chirale des pigments, ou qu'il contient une quantité tellement faible de composants de ce type que, dans les conditions d'application, seuls 0 à 3% en poids des pigments, sur base du poids total des substances liquides-cristallines orientées réticulées de manière tridimensionnelle avec une phase chirale, sont extraits.

2. Mélange suivant la revendication 1, caractérisé en ce qu'il contient un matériau de matrice qui ne possède même pas de propriétés dissolvantes pour les substances contenues dans le réseau liquide-cristallin et/ou pas de propriétés de gonflement par rapport au réseau liquide-cristallin des pigments, ou en ce qu'il ne contient pas de liquides ou de mélanges de liquides qui agissent comme des solvants pour les substances contenues dans le réseau liquide-cristallin et/ou qui ne possèdent pas de propriétés de gonflement par rapport au réseau liquide-cristallin des pigments.

3. Mélange suivant la revendication 1 ou 2, caractérisé en ce que les matériaux de matrice sont parmi le groupe des résines alkyde, mélamine, polyuréthanne, d'urée, phénoliques, d'acétate de vinyle, de nitrate de cellulose, silicone et polyester et leurs combinaisons.

4. Procédé pour l'application de mélanges suivant l'une ou plusieurs des revendications 1 à 3 sur des surfaces de substrat dans un procédé par pulvérisation, un procédé de sérigraphie, une application à la racle, une application au rouleau, une application au pinceau, une application de poudre, dans un intervalle de températures de 10°C-300°C.

5. Utilisation de mélanges suivant les revendications 1 à 3 dans le procédé par pulvérisation, dans la sérigraphie, lors d'une application à la racle, lors d'une application au rouleau, lors d'une application au pinceau ou lors d'une application de poudre.

6. Peinture, encre d'impression, matière synthétique ou revêtement de poudre, contenant un mélange suivant l'une ou plusieurs des revendications 1 à 3.

7. Moyens de transport, objets ménagers, articles de sport, papiers, textiles, non-tissés, cuirs, titres, billets de banque ou cartes de crédit revêtus d'un mélange suivant l'une ou plusieurs des revendications 1 à 3.
